# EUROPEAN PATENT SPECIFICATION

(11) **EP 0 535 728 B1**
(45) Date of publication and mention of the grant of the patent: **12.06.1996**
(21) Application number: 92202898.0
(22) Date of filing: 22.09.1992
(51) Int. Cl.: A23C 19/09, A23C 19/08, A23C 19/068

(54) **Processes for preparing cheese compositions**
Verfahren zur Zubereitung von Käsezusammensetzungen
Procédés pour la préparation de compositions de fromage

(30) Priority: 30.09.1991 US 769137
(43) Date of publication of application: 07.04.1993
(73) Proprietor: UNILEVER N.V., NL-3000 DK Rotterdam (NL); UNILEVER PLC, London EC4P 4BQ (GB)
(72) Inventor: Bodor, Janos, Unilever Research Vlaardingen Lab., NL-3133 AT Vlaardingen (NL); Brilhart, Keith Daniel, Baltimore, Maryland 21229 (US); Banach, Gerald, Columbia, Maryland 21045 (US); Nematollahi, Morteza, Tehran (IR)
(74) Representative: Rots, Maria Johanna Francisca

(56) References cited:
- DE-A- 2 340 007
- DE-C- 922 321
- FR-A- 2 298 955
- US-A- 1 522 383
- US-A- 2 251 496
- PATENT ABSTRACTS OF JAPAN vol. 015, no. 056 8 February 1991

## Description

### BACKGROUND OF THE INVENTION

### Field of the Invention

The invention relates to processes of preparing cheeses, including reduced fat cheeses.

### Related Art

In traditional methods for manufacturing cheese, a bacterial culture and rennet (and/or other clotting agent) are added to milk. The bacterial culture acts to develop acid and the rennet aids in curding the milk. The amount of rennet added and the acidity developed by the bacterial culture combined with the "setting" temperature affect the rate of whey expulsion and the rate of formation, the firmness, the elasticity, and other properties of the curd. The curded milk is cut with curd knives or wires to promote the separation of a large proportion of whey from curd. The curd contains casein, most of the butterfat, a small amount of lactose, minerals, and water.

The curd may then be cooked (at 38°C for Cheddar curd) in order to hasten the expulsion of whey from the curd. The cooked curd is drained to permanently separate the whey from the curd, then knitted to transform the curd into the characteristic texture of the cheese desired and to give time for acid development and aid in moisture control. Subsequently, the green cheese curd is salted and pressed to obtain a green cheese.

Unripened green cheese and/or green cheese curd generally are not used for direct consumption; they have a very elastic texture and very mild flavour.

Mozzarella cheese, used mainly for cooking purposes, is generally consumed in an unripened state. A variation of the above-described process in manufacturing of Mozzarella cheese is as follows: the curd, which forms after the addition of a bacterial culture and rennet to milk, typically, is not cooked but is simply cut, and the whey is drained. The curd may be washed with cold water and the water drained off. The curd may be collected in bundles for further drainage. The curd may be iced, it may be held under refrigeration and it may be permitted to warm to a temperature not exceeding 135°F (57.2°C). Subsequently, the curd is immersed in hot water or heated with steam and is kneaded and stretched until smooth and free of lumps. F. Kosikowski reported in "Cheese and Fermented Cheese Products", p. 188, that when sodium citrate or sodium phosphate emulsifiers were introduced, the Mozzarella cheese lost its stretching properties.

In order to obtain a mildly-flavoured or an aged cheese, a green cheese is ripened, i.e. stored at an optimum humidity and at a temperature in a range of from 2 to 16°C over a period of from 2 to 48 months to achieve the desired flavour and texture of the variety of cheese. The ripening, i.e. the texture and flavour development of a cheese, depends on variety of factors: the heating temperature during the process, the extent of whey drainage, the transformation of lactose to lactic acid etc. During ripening the lactose, fat, and protein in the unripened cheese are converted into various compounds of the finished cheese.

The decomposition of fats to shorter fatty acids and other aroma producing compounds and, also, the decomposition of the proteins, especially the casein, to peptides and aminoacids is provided by means of enzymes originating from the milk, enzymes from the added rennet and enzymes from the added bacterial culture(s) used in the process. Various bacteriological organisms and/or enzymes are added to the milk or the curd to obtain desired texture and flavour development, thereby providing the various kinds and types of cheeses.

Ripening usually requires at least 60 days to provide what is known as young or low-flavoured Cheddar cheese. Lengthier ripening periods of from about 3 to 6 months provide mildly flavoured cheddar cheese. Aged cheddar cheese and cheddar style varieties of cheese are produced by ripening for 6 to 12 months or longer in some cases. Storing the cheese to a degree of ripening suitable for sale takes a long time for many types of cheeses and adds costs and problems, including relatively long advance planning of the cheese manufacturing process. Therefore, there is a need to reduce the ripening time for the cheese, especially in the case of the above mentioned slow ripening cheeses.

Methods for accelerated cheese ripening generally employ higher ripening temperatures or various selected microorganisms and enzymes (in addition to conventional cheesemaking microorganisms and enzymes). Typically, such methods still require several weeks to develop a mature flavour. European Patent Application 0 159 303 describes in example 24 a cheesemaking procedure including ultrafiltration of milk and the use of selected enzymes or enzyme mixtures, which can result in the production of cheese in 24 hours. Hettinga et al. (U.S. Patent 4,379,170) disclose a process of producing a high-flavoured cheese in a short period of time; in the process, a portion of edible protein is treated with a protease to hydrolyze the protein and to develop cheese flavour components and precursors therefor, and the hydrolyzed protein is mixed with non-hydrolyzable protein-fat-salt composition to an extent that the non-hydrolyzed portion of the protein comprises a major part of the protein in the mixture.

None of the known methods provides an entirely satisfactory route to a quick production of a natural ripened cheese. For instance, increased ripening temperature may lead to possible flavour defects and microbiological spoilage of cheese; accelerated cheese ripening via proteolytic enzyme addition results in cheeses of short keepability; enzyme additions, other than coagulating enzymes, are not permitted in some countries; the techniques which produce cheese products in less than about 7 days are technically difficult to operate in that they require continuous agitation, or require complex fractionation of either milk or sources of protein. Moreover, the balance of several hundred flavour components during cheese ripening is a very delicate and complex process, which is not well understood. The complexity of the flavour and the opportunity for off-flavour (e.g., bitterness) development have contributed to the difficulties of controlling the cheese ripening process.

Manufacture of ripened cheeses having a reduced fat content presents a special problem. Low fat ripened cheeses tend to have a rubbery texture. As a remedy, according to current industrial practice, reduced fat hard cheeses are made with increased moisture content. The increased moisture is typically achieved via (cold water) washing of the curd. As a consequence, the amount of lactic acid, lactose, viable culture organisms and enzymes in the resulting fresh cheese is reduced - which is believed to contribute to the fact that flavour development in reduced fat cheeses is extremely slow and, consequently, such cheeses have a low consumer appeal. In "Cheese and Fermented Milk Foods", p. 242, Kosikowski mentions that skim milk Cheddar cheese has been found useful in standardizing cheese blends for processing, but even in this application, the amounts added are limited.

Hargrove et al. (U.S. Patent 3,156,568) disclose a cheese product, low in fat content yet resembling cheddar cheese in texture and flavour. Unfortunately, a lengthy ripening period (3 to 6 months in Example I) is required. Callanain (U.S. Patent 4,976,975) discloses a low fat hard cheese obtained through adding to the milk a specific culture strain, together with natural cheesemaking cultures. However, the product still required at least 7-10 weeks to develop a mature flavour.

Processed cheeses are made from traditional cheeses. In the manufacture of processed cheese, natural cheeses are heated at pasteurization temperatures with an emulsifying salt (also known as a melting salt) to yield a product that is more stable microbiologically, that will not undergo further ripening, and that will not separate on further heating. Pasteurization insures microbiological stability and, also, precludes ripening. Emulsifying salts are employed to prevent the cheese from breaking down and releasing fat and water. Phosphates and citrates are the most common melting salts. Processed cheese compositions free of melting salts have been disclosed, for instance, by JP 63-52840 and JP 61-158746, by Martin (U.S. Patent 1,748,781), by Schicks (U.S. Patent 2,688,553), by Gronfor (U.S. Patent 4,552,774), by Strandholm et al. (U.S. Patent 4,885,183), and by Daurelles (U.S. Patent 4,661,357). According to Paul et al., "Food Theory and Applications", p. 602, a good processed cheese is generally made from a blend of young and aged cheese, giving the desired flavour and texture.

European Patent Application 0 403 137 discloses a processed cheese product composed of 60 to 75 weight percent of Mozzarella and from about 25 to about 35 weight percent of an aged cheddar cheese, and from about 0.25 to about 0.6 weight percent sodium citrate. The process for making the product includes a step of heating the cheeses at a temperature of from about 87.8°C to about 104.4°C (190° - 220°F).

U.S. Patent 2251496 by Parsons discloses the preparation of a pasteurized, processed cheese starting with cured Cheddar curd and adding aged cheese in the presence of melting salts.

It is known in the art to prepare so-called "cold pack" cheese products, which are blended cheeses prepared without heating. For example, Japanese Patent Application 02/286061 discloses a shaped topping for pizza pie composed of heat-melting cheese and soft cheese. In the description, heat-melting cheeses are exemplified by Mozzarella and Gouda cheese or processed cheese; the soft process cheese is exemplified by fresh cheese such as cream cheese or soft or pasty processed cheese.

U.S. Patent 1522383 by Parsons is another example of "cold pack" cheese, emulsified at low temperature, in which the original texture of the raw cheese is destroyed by rapid agitation or whipping or kneading under sufficient pressure. If the cheese does not readily emulsify an emulsifying salt is used.

DE-C-922321 by Komm discloses the incorporation of whey protein in cheese curd in order to achieve accelerated maturation. No heating of blend takes place. This cheese product still needs a period of ripening, although shortened to some extent.

Cold-pack blended cheeses have a much softer and pastier texture than the texture of natural and semisoft cheeses.

Processed cheeses are typically uniformly coloured and textured. However, processed cheeses are very different from traditional cheeses with regard to their texture, consistency and, particularly, their taste. Moreover, it is not possible to ripen processed cheeses, because bacterial cultures are destroyed during pasteurization.

The related art has not provided a satisfactory and commercially feasible manufacture of a cheese having the flavour and texture of a natural ripened cheese which does not require a ripening step, or a production of a processed cheese-like product which would allow ripening.

It is an object of the invention to provide a process for manufacturing a cheese composition from a blend of ingredients, at a temperature which is lower than a pasteurization temperature.

It is another object of the invention to provide a process for manufacturing cheese (full-fat or reduced fat) having both the texture and flavour of a naturally ripened cheese, without the need for lengthy ripening periods.

It is yet another object of the invention to provide an nonpasteurized blended cheese having taste, texture and consistency similar to the taste, texture and consistency of a naturally ripened cheese.

It is a further object of the invention to provide a process for manufacturing a blended cheese composition not requiring the use of melting salts.

These and other objects and advantages of the invention will appear as the description proceeds.

### SUMMARY OF THE INVENTION

The above objects are accomplished by the present invention which includes a process of manufacturing an unpasteurized cheese composition, the process comprising the steps of:
(a) preparing a blend comprising
   (i) from 30% to 90% of an unripened cheese containing at most about 60% moisture by weight of the unripened cheese; and
   (ii) a paste comprising particles of a protein source, wherein proportions of the unripened cheese and the paste and the moisture content of the paste and the unripened cheese are selected so as to provide the moisture content of the cheese composition of at most about 60% by weight of the cheese composition; which blend is free of melting salts
(b) mixing and heating the blend to obtain the cheese composition having taste, texture and consistency similar to those of a naturally ripened cheese, wherein the heating temperature in a range of from about 35°C to about 65°C is sufficient to plasticize the blend and is below pasteurization temperatures and mixing is carried out under conditions of mild shear to prevent tdestruction of the texture of natural cheese; and
(c) packing the cheese composition.

In the inventive process, temperatures lower than pasteurization temperatures are employed. Thus, bacterial cultures present in the unripened cheese, or bacterial cultures added at some point during the process are able to survive the process and may be employed to ripen the cheese after packing, if further ripening is desired.

However, as will be apparent from the description that follows, cheeses produced by the inventive processes need not be subjected to a ripening step in order to attain the texture and/or flavour of a mildly flavoured or aged cheese. Less time is required in the inventive process than is usually required to produce a mildly flavoured or an aged cheddar cheese and similar types.

While not wishing to be bound by this theory, it is believed that the texture of the starting unripened cheese in the inventive processes is altered by virtue of addition of a paste which includes a particulated protein. The characteristic texture of the starting unripened cheese, i.e. its stringiness and elasticity, is the result of the fusion of curd particles. It is believed that in the inventive processes, protein particles interfere with the regular fusion pattern of unripened curd particles, thus altering the texture of the starting unripened cheese.

The present invention encompasses both the processes which include a ripening step and the processes, wherein the cheese composition is not subjected to further ripening after packing.

Protein particles employed in the inventive processes may be produced by pH or thermal setting. If the protein source employed in the inventive process includes a ripened cheese, the resulting composition, without being subjected to ripening, is similar in flavour to a mildly-flavoured or an aged cheese. When the protein source does not include a ripened cheese, other flavouring ingredients, such as an enzyme modified cheese, a natural or an artificial flavour, may be employed to produce the flavour of the ripened cheese in the cheese compositions. Thus, the texture and/or the flavour of the cheeses produced by the inventive processes may be similar to the texture and/or flavour of a mildly flavoured or an aged cheese, yet the cheeses need not be subjected to a ripening period. Indeed, the cheese may have the texture and/or the flavour of a mildly flavoured or an aged cheese immediately or shortly after production.

However, the invention also encompasses processes which include a ripening step. In the present processes, ripening after production is possible by virtue of plasticizing the ingredients at a temperature which is lower than pasteurization temperatures. In the present process, bacterial culture is allowed to survive the process, so that the culture may be employed in an optional ripening step.

The inventive blended cheese does not require ripening. The cheese differs from processed cheeses at least in that the inventive cheese is not pasteurized and, consequently, the taste, texture and consistency of the inventive cheese differ from the processed cheese.

The cheeses produced according to the invention include full-fat and reduced fat compositions. The texture and/or flavour of a full-fat ripened cheese may be obtained in the full-fat or reduced fat cheeses of the invention immediately or shortly after production.

### Brief Description of the Drawings

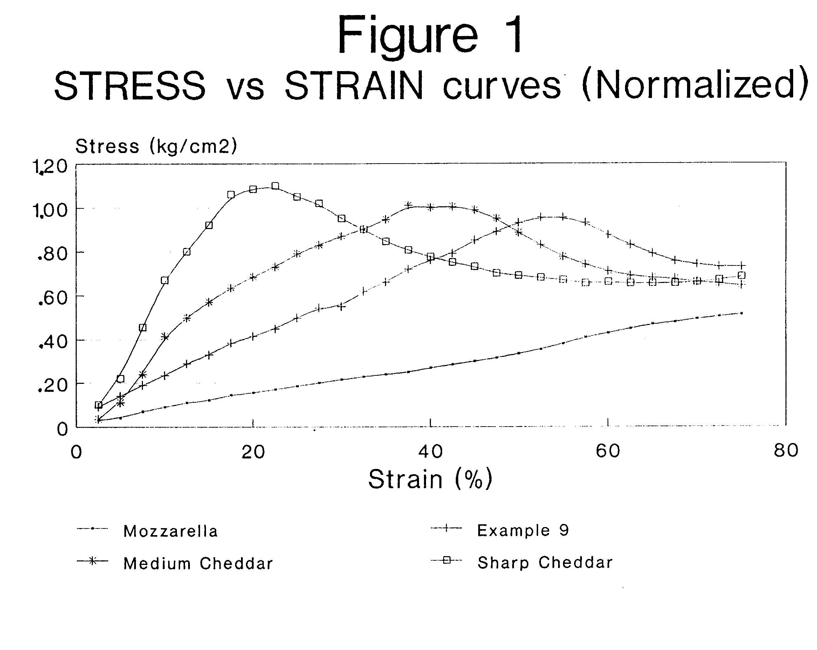

Fig. **1** is a graphical comparison of stress vs. % strain curves for Mozzarella, sharp Cheddar, medium Cheddar cheeses and a cheese according to one embodiment of the invention.

### DETAILED DESCRIPTION OF THE INVENTION

Unless otherwise specified or required by the context, percentages of ingredients are by weight of the starting blend.

The ingredients used in the products and processes of the present invention are, for purposes of this specification, as follows:
"Milk" as used herein includes milk, acidified milk, cultured milk, concentrated milk, evaporated milk, evaporated skimmed milk, low fat milk, acidified low fat milk, cultured low fat milk, skim milk, acidified skim milk, cultured skim milk, cream, heavy cream, light cream.

"Dry cottage cheese curd" and "quark" mean soft uncured cheese containing less than 0.5% milkfat and not more than 80% moisture. Dry curd cottage cheese is defined in a greater detail in 21 CFR, Part 133, Section 129, which is incorporated by reference herein. Quark has a finer texture compared to dry cottage cheese curd.

"Low fat cottage cheese" means soft uncured curd cheese containing not less than 0.5% and not more than 2% milkfat and not more than 82.5% moisture. Low fat cottage cheese is defined in a greater detail in 21 CFR, Part 133, Section 131 which is incorporated by reference herein.

"Ricotta" is a soft uncured curd cheese produced by thermal setting of whey or a mixture of whey and cream and/or milk at a predetermined pH. Ricotta typically contains 2 to 16% fat. The moisture content of Ricotta cheese is similar to that of cottage cheese.

"Ricotone" is a soft uncured curd cheese produced by thermal setting of whey at a predetermined pH. Ricotone generally contains 0-1% fat.

"Dry Ricotta" is Ricotone cheese which has been dried for several months.

"Soft Italian cheese" means mozzarella, pasta filata, scamorza, low-moisture mozzarella and scamorza cheeses, part skim mozzarella and scamorza cheese, low-moisture, part skim mozzarella and scamorza cheeses. Generally, soft Italian cheeses are either subjected to only a few days of ripening or they are not subjected to ripening at all.

"Soft Italian cheese curd" means the curd of the "soft Italian cheese" (as defined under "soft Italian cheese") after draining, but before stretching. Also included is the curd after stretching but before moulding.

"Mozzarella cheese and scamorza cheese" contain minimum 45% milkfat by weight of the solids; the moisture content is more than 52% but not more than 60% by weight. These cheeses are defined in a greater detail in 21 CFR 133.155, incorporated by reference herein.

"Low-moisture mozzarella and scamorza cheeses" contain minimum 45% milkfat by weight of the solids; the moisture content is more than 45% but not more than 52% by weight. These cheeses are defined in a greater detail in 21 CFR 133.156, incorporated by reference herein.

"Part skim mozzarella and scamorza cheeses" conform to the definition and standard of identity as prescribed for Mozzarella cheese in 21 CFR 133.155, except that its milkfat content, calculated on the solids basis, is less than 45% but not less than 30%.

"Low-moisture, part skim mozzarella and scamorza cheeses" conform to the definition of low-moisture mozzarella cheese in 21 CFR 133.156, except that its milk fat content, calculated on the solids basis, is less than 45% but not less than 30%.

The term "natural cheese" is employed herein to distinguish from pasteurized processed cheese.

"Cheddar cheese" contains 50% milk fat by weight of the solids; the maximum moisture content is 39% by weight. Cheddar cheese is defined in a greater detail in 21 CFR 133.113, incorporated by reference herein.

"Ripened cheeses" are those products that are purposely exposed to warm temperatures or held for long periods at colder temperatures to permit bacteria and/or enzymes to transform a green cheese into a cheese of a specific flavour, texture, and appearance. Ripened cheeses may have mild or sharp flavour, the potency of the flavour depending, in part, on the length of the ripening period.

"Unripened cheese" is a cheese that has not been subjected to the ripening procedure described in the paragraph above for more than 60 days. The term "unripened cheese" in the present invention encompasses soft Italian cheese, soft Italian cheese curd, green cheese and green cheese curd.

"Green cheese" means a pressed and moulded cheese curd which is less than about 60 days old. % fat content of the green cheese depends on the particular type of cheese: a particular variety of cheese has the same % fat in a green cheese and in a ripened cheese stages.

"Green cheese curd" means the curd after cooking and draining and knitting, but before pressing. Reduced fat and low fat curds are included. A green cheese curd has a higher moisture content than a green cheese.

"Pressing" is a step after which the curd ceases being the curd and starts being a green cheese. Also included is the cheese after pressing but before moulding.

Microparticulate whey protein is a slurry of whey protein concentrate subjected to high shear while undergoing heating, as described in U.S. Patents 4,734,287 and 4,961,953, incorporated by reference herein. Microparticulate whey protein can be obtained commercially from Simplesse Company as Simplesse 100 ®.

Also suitable is a microparticulate whey protein obtained by the process described in published European Patent Application No. 352,144, incorporated by referenced herein. Microparticulate whey protein typically has a particle size in a range of from 0.1µ to 30µ.

Milk protein concentrate is a total milk protein, prepared from skim milk, out of which the lactose and mineral salts have been partly removed by means of ultrafiltration. Commercially, it can be obtained as MPC 75® from DMV Ridgeview, Inc.

All the ingredients defined above may be obtained commercially or may be prepared via additional steps included in the inventive process.

The essential ingredient employed in the compositions and processes of the present invention is the unripened cheese (as defined above), which contains at most 60% moisture by weight of the cheese, preferably from 40 to 60% of moisture. The unripened cheese should have some meltability and stretchability. The unripened cheese is preferably selected from the group consisting of green cheese, green cheese curd, soft Italian cheese, soft Italian cheese curd, (all defined above) and mixtures thereof. Cheeses and curds which are chemically equivalent to green cheese, or green cheese curd, or soft Italian cheese, or soft Italian cheese curd, but do not have standards of identity may be employed. Generally, from about 30% to about 90% of the unripened cheese is employed in the present invention, although at the higher percentages some oiling-out may occur. Preferably, to minimize oiling-out on one hand and to avoid crumbling on the other hand, from about 40% to about 85% of the unripened cheese is included in the invention. Most preferably, the amount of the unripened cheese is from about 65% to about 80%. For manufacturing a low-fat cheese composition preferably the unripened cheese is made from a reduced fat milk containing from 0 to 3.5% fat. The preferred unripened cheese is mozzarella or scamorza cheese, low-moisture, part-skim mozzarella or scamorza cheese, a green cheese curd and mixtures thereof. When it is desired to produce a reduced fat cheese, the preferred source of the unripened cheese is selected from a reduced fat or low fat variety; low-moisture, part-skim mozzarella or scamorza cheese, or part-skim mozzarella or scamorza cheese, or reduced fat green cheese or reduced fat green cheese curd are particularly preferred.

A paste containing a particulated protein source, is a second essential ingredient included in the present invention. The proportions of the unripened cheese and the paste and the moisture content of the paste and of the unripened cheese are selected so as to provide the moisture content in the final cheese composition of at most about 60% by weight of the cheese composition. The moisture content of the paste preferably is at least about 40%, more preferably from about 40% to about 60%. Generally, the protein source used in the present invention is selected from the group consisting of a ripened cheese, cottage cheese, low fat cottage cheese, dry curd cottage cheese, baker's cheese, dry curd bakers cheese, quark, ricotta, dry ricotta, ricotone, impastata, microparticulated whey protein, and mixtures thereof. Other protein sources which are chemically equivalent to the protein sources listed above may be employed.

The paste preferably includes a ripened cheese, so that the flavour of the cheese resulting from the inventive process is similar to the flavour of a mildly-flavoured or an aged cheese. However, when the paste employed in the present invention does not include a ripened cheese, it is still possible to attain the flavour of a ripened cheese, according to the inventive process, by including a flavouring ingredient such as an enzyme modified cheese (generally, from about 0.2% to about 1%), a natural cheese flavour, an artificial cheese flavour, and mixtures thereof.

The ripened cheese in the processes of the invention is typically a ripened Cheddar cheese. Preferably, the ripened cheese is at least 1 year old, more preferably it is 1.5 to 3 years old. Reduced fat ripened cheeses, e.g. reduced fat Cheddar, may be employed. Examples of other ripened cheeses which are suitable include but are not limited to Cheddar-type cheeses, Gouda cheese, Edam, Swiss or Ementhal and mixtures thereof. Mixtures of Cheddar cheese with above cheeses may be used. Cheddar-type cheeses include any cheeses made by a process which is the same or similar to that used for making Cheddar cheese. Cheddar-type cheeses include but are not limited to Colby cheese, Monterey cheese, Monterey jack cheese, coon cheese, smoked cheddar cheese, club cheddar cheese and mixtures thereof.

Preferably the paste includes the ripened cheese in an amount effective to impart to the composition which has not yet been ripened the flavour of the ripened cheese up to to about 15% of the ripened cheese. Mixtures of the ripened cheese and quark are preferred in order to attain a cheese having the optimum flavour and texture immediately after production at an optimum cost. The amount of quark ranges from about 7% to about 20%, preferably from about 7% to about 15%.

Typically, the protein source or a mixture of protein sources included in the paste will inherently contain the minimum moisture content required in a paste for the inventive process. However, the level of moisture in the paste may be adjusted by addition of water, or milk, or moisture-containing ingredients, or cheese whey, or mixtures thereof to the paste.

The starting blend may, and preferably does, include milk protein concentrate (powder or slurry) to enhance the hardness (or to reduce the moisture content) of the composition. A typical amount of milk protein concentrate (about 75% milk protein) is in a range of from about 2% to about 8%, preferably from about 4% to about 7%.

Milk protein concentrate may be prepared as part of the present process.

Milk protein may be purchased as a concentrate (slurry) or as a powder. When the inventive process includes the addition of milk protein concentrate in a powdered form, it is preferred to premix milk protein concentrate with the unripened cheese prior to introducing the unripened cheese into the blend. This variation of the procedure avoids the possibility of having granules of undissolved milk protein concentrate in the product.

Other optional ingredients known to a cheesemaker may be included. For instance, the inventive composition may include a natural or an artificial colourant, e.g. annato, a calcium source such as calcium chloride, salt, lactic acid, and the like.

The compositions of the present invention are, preferably, all natural. Therefore, the compositions exclude melting salts, e.g. phosphates, diphosphates, triphosphates, tripolyphosphates, pyrophosphates, hexametaphosphates, orthophosphates, aluminophopsphates, and citrates. Other melting salts include acetates and tartrates. All these salts are usually sodium salts.

The most preferred process for producing a reduced fat Cheddar composition, according to the invention, employs from 65% to 75% of the unripened cheese (preferably selected from low-moisture, part skim Mozzarella cheese, green cheese curd, reduced fat green cheese curd and mixtures thereof), from 7% to 15% of ripened Cheddar, from 7% to 20% of quark, and from 5% to 10% of milk protein concentrate (75% milk protein). The reduced fat Cheddar cheese, without being subjected to a ripening step, has the texture and flavour similar to the texture and the flavour of a full-fat ripened Cheddar cheese.

According to the inventive process, a paste including a particulated protein source is prepared using any conventional mixer, such as a food processor or Stephan mixer. Optional ingredients, e.g., a colourant and/or a flavourant may be included in the paste. The particles of a protein source in the paste are individual or agglomerated discrete units of such dimensions that they can be seen under a microscope but are not individually discernible with a naked eye. The preferred dimension of the particles is less than about 50 microns, preferably less than about 20 microns. Adding the protein source in the form of particles ensures full dispersion of the protein source in the unripened cheese.

The resulting paste is blended with an unripened cheese. Optionally, the unripened cheese has been precut or shredded,.e.g. in Stephan mixer. Preferably, the resulting blend is a relatively coarse blend, such that individual ingredients are still clearly discernible within the blend.

The blend is mixed and heated in order to plasticize the blend.

The heating temperature in the present process is such that the blend is rendered plastic, yet bacteria are preserved. The minimum temperature is about 35°C, preferably 45°C, and most preferably 50°C. The upper temperature limit depends on the particular bacteria present in the blend, since the temperature at which various bacteria are rendered inactive varies. However, generally, the upper temperature limit is at about 65°C, preferably at about 55°C. Thus, heating is carried out at a temperature in the range of from 35°C to 65°C, preferably from 45°C to 55°C.

Preferably, the mixing is carried out under conditions of mild shear; high shear may result in "oiling-out" (oil separation). The preferred apparatus for effecting mixing and heating is a co-current flow tubular heat exchanger with static mixers (may be made by APV Crepaco). Other apparatus include scraped surface heat exchanger (ex Alpha-Laval), and pin mixers, as long as sufficient mixing and heating can be carried out to effect rapid and even heat transfer through the blend under mixing and heating conditions described above.

A mozzarella/pasta filata mixer (from Stainless Steel Fabricating, Inc.) or a processed cheese extrusion device are also suitable for effecting mixing and heating in the inventive process.

The starting blend may need to be pumped to a heating and mixing device. Suitable pumps preferably have extrusion/auger (screw) device or positive displacement feeding (lobe or gear). A separate pump may not be necessary if a mozzarella/pasta filata mixer or processed cheese extrusion device is employed.

Heating and mixing are typically carried out for a period of time sufficient to render the plastified blend uniform in appearance, typically for no longer than about 10 minutes, preferably for about 5 minutes.

The product of the invention is packed at a temperature at which the product is still plastic: preferably, at a temperature of at least from about 35°C to 40°C, preferably at a temperature above 40°C. Preferably, the composition is formed into a desired shape, e.g. by moulding or extrusion, prior to packing. The process may optionally include cooling the cheese prior to packing and may include salting the cheese prior to packing.

The maximum amount of moisture in the cheeses resulting from the inventive process depends on the moisture content and the amounts of the starting ingredients. Generally, the target fat, moisture content solids nonfat content, pH, acid content, salt content, and lactose content in the desired product are set. The appropriate amounts and proportions of the unripened cheese and the paste components are then selected using a linear optimizer.

Typically, the product of the invention is a cheese composition having at most about 60% moisture, preferably about 40-60% moisture by weight of the final composition. Cheeses of this moisture content are usually generically called "hard and semisoft cheeses." Due to the relatively low moisture content in the cheese produced by the inventive processes, it is easier to slice the obtained cheese than to spread it.

The compositions resulting from the inventive process are of uniform texture and colour: individual ingredients are not visually discernible in the final product. Yet, the compositions are unlike processed cheeses in at least two respects. First, the texture of the cheese produced herein is less homogeneous than the texture of the processed cheese; the texture of the cheese resembles the texture of the natural cheese. Secondly, the compositions herein include a live bacterial culture. The bacterial culture in the compositions of the invention may be present inherently (from the unripened cheese or the protein source). Optionally, an additional ripening agent selected from the group consisting of bacterial cultures, enzymes and mixtures thereof may be added to the composition prior to step (C). The presence of the bacterial culture allows for optional ripening of the inventive composition after packing.

According to the present invention, the reduction in fat content of the cheese is possible by selecting part or all of the starting unripened cheese from the low fat or part skim variety. However, the reduced fat cheese may result even without employing a low fat or part skim cheeses by virtue of dilution of the starting unripened cheese with a paste which contains a low fat protein source. The inventive process may be employed to produce cheeses of reduced fat content, i.e. fat content of less than about 20% or even less than 15% by weight of the final composition.

The following examples illustrate the products and processes of the present invention, although the invention is not limited thereto.

### EXAMPLE 1

This Example investigated the effects on texture of using microparticulated whey protein (mpp). Low-moisture, part-skim (LMPS) Mozzarella was used as an unripened cheese.

100g samples were prepared. Mozzarella was shredded and heated for about 40-50 seconds in a 650 watt microwave oven to obtain a plasticized but not liquid mozzarella, followed by quickly stirring in chopped cheddar and mpp, covering and refrigerating.

| Ingredients | A | B | C | D | E |
|---|---|---|---|---|---|
| Mozzarella, LMPS | 90% | 85% | 80% | 75% | 70% |
| mpp* | 0% | 5% | 10% | 15% | 20% |
| 1 year old Cheddar | 10% | 10% | 10% | 10% | 10% |

| | | | | | |
|---|---|---|---|---|---|
| *Simplesse 100® (40% solids microparticulated whey protein) | | | | | |

It was observed that the product became softer as the level of microparticulated whey protein in the product increased. Bench sensory evaluation indicated that microparticulated whey protein level between 5 and 10% was most preferred. The texture of all samples was very different from that of starting mozzarella; the texture was less elastic, closer to ripened cheddar cheese.

### EXAMPLE 2

This Example investigated the use of various protein sources in the composition. The same method of preparation was followed as in Example 1.

| Ingredients | Weight % | | | | | | | | |
|---|---|---|---|---|---|---|---|---|---|
| | A | B | C | D | E | F | G | H | I |
| Mozarella, LMPS | 81.75 | 82.00 | 82.00 | 80.95 | 80.95 | 80.95 | 79.75 | 81.25 | 81.45 |
| Cheddar (1yr old) | 10 | 10 | 10 | 10 | 10 | 10 | 10 | 10 | 10 |
| mpp | 7.5 | - | - | 7.5 | - | - | 7.5 | 7.5 | - |
| Ricotta | - | 7.5 | - | - | 7.5 | - | - | - | - |
| Cottage Cheese | - | - | 7.5 | - | - | 7.5 | - | - | 7.5 |
| Flavour | 0.5 | 0.5 | 0.5 | 0.5 | 0.5 | 0.5 | 1.5 | - | - |
| Salt | - | - | - | 0.8 | 0.8 | 0.8 | 1.0 | 1.0 | 0.8 |
| Annatto | 0.25 | - | - | 0.25 | 0.25 | 0.25 | 0.25 | 0.25 | 0.25 |
| Gouda Flavour | - | - | - | - | - | - | - | - | - |

All samples within the scope of the invention had, immediately after the production, texture and flavour resembling the texture and flavour of the ripened cheese. All samples were soft but sliceable. A coarse fat dispersion was noted when the product was cut, as well as a darker colour, and high gloss. Protein was thought to have some role to play in the transluscency. Samples F, G and H, which contained mpp or cottage cheese and also contained salt, were preferred over the samples which did not contain salt or the samples which contained ricotta.

### EXAMPLE 3

The following formulation was prepared by a method outlined in Example 1, except the paste of all the ingredients, except mozzarella, was prepared using a food processor (Norelco®). 97.28g Mozzarella was mixed with 27.72g of the paste.

| | |
|---|---|
| Mozzarella | 77.88% |
| Cheddar | 10.0% |
| mpp | 6.0% |
| Cottage Cheese | 4.0% |
| Cheddar Flavour | 1.0% |
| Salt | 1.0% |
| Annatto | 0.12% |
| Analysis of the Formulation: | |
| pH | 5.16 |
| Moisture | 46.37% |
| TA (titratable acidity) | 1.77% |
| Salt | 2.006% |
| Fat | 19.6% |

### EXAMPLE 4

The cheese, including low fat mozzarella (analysis indicated 6.5% fat), within the scope of the invention, was prepared by a method outlined in Example 3.

| | |
|---|---|
| Low fat mozzarella | 80g |
| Paste (as in Example 3) | 22g |
| mpp (additional) | 8g |

The texture of the cheese was less rubbery than in Example 3. Addition of microparticulated whey protein improved texture. The addition of mpp resulted in a more distinct whey taste than in the Example 3. The Example illustrates that mpp improves the texture of the cheese, and that excessive amounts of mpp may result in whey off-flavour.

Examples 5-11 were carried out in a pilot plant. Ingredients are cut to a paste or granular mixture in Stephan mixer UM-40®, then fed using Doehring pump (screw auger fed positive displacement pump, Model No. 35PF) into a heating and working apparatus as descriped in the Examples. Subsequently, the cheese was packed while the product was still at the temperature indicated in the table.

### EXAMPLE 5

Processing comparison between scraped surface heat exchanger (SSHE) and tubular heat exchanger with static mixers inside (THE).

| Sample | | | | | |
|---|---|---|---|---|---|
| | A | B | C | D | E |
| Mozzarella, LMPS | 69.88% | 58.78% | 77.81% | 77.81% | 77.81% |
| Cheddar | 10.0% | - | 11.0% | 11.0% | 11.0% |
| Reduced-fat Ripened Cheddar (about 20% fat) | - | 30.0% | - | - | - |
| mpp | 14.0% | 7.0% | - | - | - |
| Cottage Cheese, dry curd | 4.0% | 3.0% | 10.0% | 10.0% | 10.0% |
| Cheddar Flavour | 1.0% | 0.30% | 0.30% | 0.30% | 0.30% |
| Salt | 1.0% | 0.70% | 0.70% | 0.70% | 0.70% |
| Annatto | 0.12% | 0.12% | 0.12% | 0.12% | 0.12% |
| Lactic Acid (88%) | - | 0.10% | 0.07% | 0.07% | 0.07% |
| THE production Heating/product temperature | 68°C/18°C | 69°C/18°C | 58°C/17°C | - | - |
| SSHE production Heating/product temperature | - | - | - | 56°C/33.°C | 66°C/37°C |

Samples D and E produced in scraped surface heat exchanger (SSHE) had oily surface and had more free oil within its structure than Samples A, B and C, produced in a tubular heat exchanger (THE). Oiling out was attributed to higher shear conditions in sshe. In all samples, except Sample E, the processing temperature was not sufficient to plasticize the blend: all samples except sample E, had a non-uniform consistency; bits of mozzarella were visible in the final products.

### EXAMPLE 6

The example investigated the effect of the temperature of the blend in a heating and mixing device on the texture of the product. The same method was employed as in Example 5. The device employed was a tubular heat exchanger.

| | |
|---|---|
| Mozzarella, LMPS | 77.78% |
| Reduced Fat Ripened Cheddar (about 20% fat) | 11.0% |
| Cottage Cheese, dry curd | 10.0% |
| Cheddar Flavour | 0.30% |
| Salt | 0.70% |
| Lactic Acid | 0.07% |
| Annatto | 0.15% |

| | Sample | | | | |
|---|---|---|---|---|---|
| | A | B | C | D | E |
| Back pressure (kg/cm²) | 14 | 9.8 | 7 | 17.5 | 12.95 |
| Mass flow rate (Kg/hr) | 38 | 38 | 38 | 52 | 52 |
| Jacket temperature (°C) | 77.8 | 82.2 | 96.1 | 85 | 97.8 |
| Product temperature (°C) | 35.8 | 43 | 50 | 38 | 42 |
| Moisture (%) | 50.6 | 50.5 | 50.3 | 50.6 | 50.5 |
| Fat (%) | 16.8 | - | - | 17.0 | - |
| Salt (%) | 1.99 | - | - | 2.06 | - |
| pH | 5.25 | 5.44 | 5.30 | 5.41 | 5.39 |
| Titratable acidity (%) | 1.77 | 1.96 | 1.62 | 1.71 | 1.77 |

Samples D and E were reworked Samples B and C. Sample C, processed at 50°C was most preferred with respect to texture, although the texture of all samples was similar to the texture of a mildly-flavoured, full-fat Cheddar cheese. All samples had, immediately after production, the flavour of a mildly-flavoured, full-fat Cheddar cheese. Reworking further improved the texture of the samples.

### EXAMPLES 7-9

Use of milk protein concentrate to reduce moisture level in the product was investigated.

| | EXAMPLES | | |
|---|---|---|---|
| | 7 | 8 | 9 |
| Mozzarella, LMPS | 69.27% | 68.95% | 67.55% |
| Ripened Reduced Fat Cheddar* | 17.00% | - | - |
| Ripened, Full-fat Cheddar (3 yrs.) | - | 10.00% | 10.00% |
| Cottage Cheese, Dry Curd | 10.00% | - | - |
| Quark, Skim | - | 12.50% | 12.50% |
| Cheddar Flavour | 0.30% | 0.30% | 0.30% |
| Salt | 0.73% | 0.40% | 0.40% |
| Lactic Acid | 0.07% | 0.23% | 0.23% |
| Milk Protein Concentrate** | 2.50% | 7.50% | 8.90% |
| Annatto | 0.13% | 0.12% | 0.12% |
| Processing temperature (C°) | 50 | - | 50 |
| Moisture | 49.94% | 46.90% | 47.27% |
| Fat | 16.40% | 16.90% | 16.80% |
| Salt | 2.025% | 1.63% | 1.615% |
| pH | 5.44 | 5.39 | 5.45 |
| TA | 1.69% | 2.10% | 2.10% |

| | | | |
|---|---|---|---|
| *About 20% fat content | | | |
| **MPC 75® | | | |

The moisture level in Examples 7-9 was reduced as compared to Example 6C. The product was judged to have good flavour and texture immediately after production.

Examples 7 and 8 demonstrated that increasing levels of milk protein concentrate led to decreased moisture level in the product.

In Example 9, mozzarella was premixed with milk protein to prevent powder from forming grainy bits in the product.

Compression measurements were conducted on the cheese of Example 9 as compared with mozzarella cheese (18.5% fat), sharp Cheddar and mild-flavoured (medium) Cheddar cheeses (both 33% fat). The procedure for conducting compression measurements was as follows:

### Equipment used:

Instron Universal Testing Machine: Model 4501
Load Cell: 10kN full scale (Instron)

### Sample Preparation:

A sample of cylindrical shape of 1.5 cm diameter was obtained from the cheese block using cork borer of an internal diameter of 1.5 cm. The cylindrical block was then cut to 2 cm height.

### Analysis:

Compression indicated the force required to further compress the cheese versus the cross section area of the cheese. The sample of 2.0 cm height and 1.5 cm diameter was compressed between two plates using Instron compression/tension load cell, operated in compression mode with the full scale either set at 5 kg or 10 kg depending on the hardness of the cheese. The cross head speed was 10 cm/min, and the sample was compressed to 75% (0.5 cm) of the original height (total height compressed is 1.5 cm height). The load vs. distance was then plotted on the chart paper where the chart speed was in proportion of 1:5.

### Results:

The texture of the 4 cheeses was compared by normalizing the force vs. distance curves to true stress vs. % strain curves assuming that the sample maintains cylindrical shape with changing cross-sectional area upon compression.

The results are illustrated in Fig. I. It can be seen that the texture of Example 9, immediately after production, resembled the texture of ripened Cheddar cheeses, particularly medium (mildly-flavoured) Cheddar cheese. The texture of the product differed significantly from the starting Mozzarella cheese.

### EXAMPLE 10

Examples 6D and 7 were removed from 15°C incubator, where they were kept for twelve days, to compare with samples of examples 6D and 7 held for 12 days at 5°C.

| Sample | Before Storage | 5°C | 15°C |
|---|---|---|---|
| 6D pH | 5.41 | 5.37 | 5.10 |
| TA | 1.71 | 1.99% | 2.51% |
| 7 pH | 5.44 | 5.41 | 5.17 |
| TA | 1.69 | 1.60% | 2.17% |

All samples 6D and 7 of Example 10 had the texture and flavour resembling those of a 3-5 months old ripened cheese. This Example demonstrated that the process, according to the invention, does not inactivate bacterial culture, since pH decreased and titrable acidity values generally increased during storage.

More lactic acid was produced during storage at 15°C. The texture of the samples stored at 15°C compared with the original was more moist and broke down better in the mouth. The flavour of the samples stored at 15°C was more acidic than the flavour of the original samples.

The texture and the flavour of samples stored at 5°C was similar to the texture and the flavour of the original samples.

### EXAMPLE 11

| 10 Kg BATCHES | | | | |
|---|---|---|---|---|
| INGREDIENTS | WEIGHT (%) | | | |
| | A | B | C | D |
| 1-Mozzarella, LMPS | 90.0 | 70.0 | 50.0 | 30.0 |
| 2-Milk Protein Concentrate* | 1.3 | 3.9 | 6.5 | 9.1 |
| 2-Cheddar Cheese | 5.3 | 15.9 | 26.5 | 37.1 |
| 4-Quark | 3.3 | 10.0 | 16.7 | 23.4 |
| 5-Salt | 0.1 | 0.2 | 0.3 | 0.4 |
| Paste (3, 4 & 5) | 8.7 | 26.1 | 43.5 | 60.9 |
| Processing temperature: 48-52°C | | | | |

| | | | | |
|---|---|---|---|---|
| *MPC 75® | | | | |

The blend, containing Mozzarella, mpc and the Paste, was fed into the Doerhing pump being careful to keep the cheese mix packed around the extrusion screws at all times. The heat exchange medium (water) was set at 94°C and the mass flow rate at 38 kg/hr to achieve the processing temperature of 48 to 52°C. Product was packed into plastic sausage-type sleeves for cooling and later repacked by dipping in hot wax.

Samples B, C and D are within the scope of the invention, while sample A is not. It was observed that samples "A" & "B" had the most oiling out among the samples of Example 11. Sample "D" had the driest appearance and the most tendency to crumble among the samples. "B" and "C" were the firmest among the samples and had no tendency to crumble, with "B" having some loose oil and "C" having none.

Sample A ran the same way melted Mozzarella does. Samples B, C and D had the texture and the flavour of the ripened cheese. The texture and the flavour of samples "B" and "C" were more preferred than that of sample "D".

### EXAMPLE 12

The following process, within the scope of the invention, was followed for preparation of Example 12 Samples "A" & "B".
(1) The cheddar curd and milk protein concentrate (MPC 75® were mixed in the Stephan mixer until the blend formed a sticky powder or paste.
(2) The remaining ingredients were added and mixed until a homogeneous paste has formed. Then, during the last minute of mixing, a vacuum (0,9.10⁵ Pa) was pulled. The vacuum was released after mixing had been stopped. Mixer contents were placed into a bag.
(3) Each batch was fed into the Doerhing pump being careful to keep the cheese mix packed around the extrusion screws at all times. The heat exchange medium (water) was set at 88°C and the mass flow rate at 38 kg/hr to achieve a product pack temperature of 48 to 52°C. Product was packed into plastic sausage-type sleeves for cooling and later repacked by dipping in hot wax.

| Sample A | | | | | |
|---|---|---|---|---|---|
| | Weight% | Moisture% | Fat % | Acid % | Salt % |
| Green Cheddar Curd | 68.645 | 39.99 | 30.40 | 1.56 | 2.21 |
| Cottage Cheese, dry | 13.800 | 79.80 | 0.50 | 1.46 | - |
| Cheddar, aged | 10.000 | 39.00 | 33.00 | 1.80 | 1.60 |
| Salt | 0.100 | - | - | - | 100.00 |
| Lactic Acid | 0.055 | 12.00 | - | 88.00 | - |
| Milk Protein Conc. (75% protein) | 7.400 | 5.50 | 3.0 | - | - |
| TOTALS | 100.000 | 42.80 | 24.44 | 1.50 | 1.82 |
| Batch weight (kg): 3 | | | | | |

| Sample B | | | | | |
|---|---|---|---|---|---|
| | Weight% | Moisture% | Fat % | Acid % | Salt % |
| Green Cheddar Curd | 79.62 | 39.99 | 30.40 | 1.56 | 2.21 |
| Quark | 13.20 | 79.80 | 0.50 | 1.46 | - |
| Lactic Acid | 0.08 | 12.00 | - | 88.00 | - |
| Milk Protein Conc. (75% protein) | 7.10 | 5.50 | 3.00 | - | 0.60 |
| TOTALS | 100.00 | 42.80 | 24.47 | 1.50 | 1.80 |
| Batch weight (kg): 15 | | | | | |

Sample "A" was found to have more of an aged cheese flavour than Sample "B". The sampels of this Example, incorporating green cheddar curd, had less loose fat and had a more pronounced cheese flavour than similar samples prepared with LMPS mozzarella.

## Claims

1. A process of manufacturing an unpasteurized cheese composition, the process comprising the steps of:
(a) preparing a blend comprising
(i) from 30% to 90% of an unripened cheese containing at most about 60% moisture by weight of the unripened cheese; and
(ii) a paste comprising particles of a protein source, wherein proportions of the unripened cheese and the paste and the moisture content of the paste and the unripened cheese are selected so as to provide the moisture content of the cheese composition of at most about 60% by weight of the cheese composition, which blend is free of melting salts;
(b) mixing and heating the blend to obtain the cheese composition having taste, texture and consistency similar to those of a naturally ripened cheese, wherein the heating temperature in a range of from about 35°C to about 65°C is sufficient to plasticize the blend and is below pasteurization temperatures and mixing is carried out under conditions of mild shear to prevent destruction of the texture of natural cheese; and
(c) packing the cheese composition.

2. The process of claim 1 wherein the protein source is selected from the group consisting of a ripened cheese, cottage cheese, low fat cottage cheese, dry curd cottage cheese, baker's cheese, dry curd bakers cheese, quark, ricotta, dry ricotta, ricotone, impastata, microparticulated whey protein, and mixtures thereof.

3. The process of claim 1 wherein the amount of the unripened cheese is in a range of from about 40% to about 85% and preferably from 65% to 80%.

4. The process of claim 2 wherein the protein source comprises the ripened cheese in an amount effective to impart to the composition which has not been ripened the flavour of the ripened cheese up to about 15% of the ripened cheese.

5. The process of claim 2 wherein the protein source is a mixture of about 7% to about 15% of a ripened cheese and about 7% to about 20% of quark, calculated on the total weight of the composition.

6. The process of claim 1 wherein the process comprises premixing milk protein with the unripened cheese, prior to preparing the blend.

7. The process of claim 6 wherein milk protein is added as milk protein concentrate (75% protein) in an amount in a range of from about 2% to about 8%.

8. The process of claim 1 wherein the unripened cheese is selected from the group consisting of a green cheese, a soft Italian cheese, a curd of a green cheese, a curd of a soft Italian cheese and cheeses and curds which are chemically equivalent thereto and mixtures thereof.

9. The process of claim 8 wherein the soft Italian cheese is low-moisture, part skim mozzarella cheese.

10. The process of claim 1 wherein the heating is carried out at a temperature in a range of from about 45°C to 65°C.

11. The process of claim 1 wherein the cheese composition contains less than about 20% fat.

12. The process of any one of claims 1-11, wherein a flavouring ingredient is included selected from the group consisting of ripened cheese, enzyme modified cheese, a natural cheese flavour an artificial cheese flavour and mixtures thereof

## Patentansprüche

1. Verfahren zur Zubereitung einer unpasteurisierten Käsezusammensetzung, wobei das Verfahren die Schritte umfaßt:
(a) Herstellung eines Gemisches, umfassend
(i) 30 bis 90 % eines ungereiften Käses, der höchstens etwa 60 % Feuchtigkeit, bezogen auf das Gewicht des ungereiften Käses enthält, und
(ii) eine Teilchen einer Proteinquelle umfassende Paste, worin die Anteile des ungereiften Käses und der Paste und der Feuchtigkeitsgehalt der Paste und des ungereiften Käses so gewählt sind, daß sich ein Feuchtigkeitsgehalt der Käsezusammensetzung von höchstens etwa 60 %, bezogen auf das Gewicht der Käsezusammensetzung, ergibt, wobei das Gemisch frei von Schmelzsalzen ist,
(b) Mischen und Erhitzen des Gemisches zur Erzielung der Käsezusammensetzung mit Geschmack, Textur und Konsistenz ähnlich denjenigen eines natürlich gereiften Käses, bei dem die Erhitzungstemperatur im Bereich von etwa 35 bis etwa 65°C zum Plastifizieren des Gemisches ausreicht und unter der Pasteurisierungstemperatur liegt, und das Mischen unter Bedingungen milder Scherwirkung durchgeführt wird, um die Zerstörung der Textur von natürlichem Käse zu verhindern, und
(c) Abpacken der Käsezusammensetzung.

2. Verfahren nach Anspruch 1, bei dem die Proteinquelle aus der aus einem gereiften Käse, Hüttenkäse, fettarmem Hüttenkäse, Hüttenkäse aus trockenem Käsebruch, Bäckerkäse, Bäckerkäse aus trockenem Käsebruch, Quark, Ricotta, trockenem Ricotta, Ricotone, Impastata, mikrofeinteiligem Molkeprotein und Mischungen davon bestehenden Gruppe ausgewählt ist.

3. Verfahren nach Anspruch 1, bei dem die Menge des ungereiften Käses in einem Bereich von etwa 40 bis etwa 85 % und vorzugsweise von 65 bis 80 % liegt.

4. Verfahren nach Anspruch 2, bei dem die Proteinquelle den gereiften Käse in einer wirksamen Menge bis zu etwa 15 % gereiften Käse umfaßt, um der noch nicht gereiften Zusammensetzung das Aroma des gereiften Käses zu verleihen.

5. Verfahren nach Anspruch 2, bei dem die Proteinquelle eine Mischung von etwa 7 bis etwa 15 % eines gereiften Käses und etwa 7 bis etwa 20 Quark, berechnet auf das Gesamtgewicht der Zusammensetzung, ist.

6. Verfahren nach Anspruch 1, bei dem das Verfahren das Vormischen von Milchprotein mit dem ungereiften Käse vor der Herstellung des Gemisches umfaßt.

7. Verfahren nach Anspruch 6, bei dem das Milchprotein als Milchproteinkonzentrat (75 % Protein) in einer Menge im Bereich von etwa 2 bis etwa 8 % zugefügt wird.

8. Verfahren nach Anspruch 1, bei dem der ungereifte Käse aus der aus einen grünen Käse, einem italienischen Weichkäse, einem Käsebruch eines grünen Käses, einem Käsebruch eines italienischen Weichkäses und Käsen und Käsebrüchen, die hierzu chemisch äquivalent sind, und Mischungen davon bestehenden Gruppe ausgewählt ist.

9. Verfahren nach Anspruch 8, bei dem der italienische Weichkäse feuchtigkeitsarmer halbmagerer Mozzarellakäse ist.

10. Verfahren nach Anspruch 1, bei dem das Erhitzen bei einer Temperatur im Bereich von etwa 45 bis 65 °C durchgeführt wird.

11. Verfahren nach Anspruch 1, bei dem die Käsezusammensetzung weniger als etwa 20 % Fett enthält.

12. Verfahren nach irgendeinem der Ansprüche 1 bis 11, bei dem ein aromatisierender Bestandteil, ausgewählt aus der aus gereiftem Käse, enzymmodifiziertem Käse, einem natürlichen Käsearoma, einem künstlichen Käsearoma und Mischungen davon bestehenden Gruppe, mitverwendet wird.

## Revendications

1. Un procédé de fabrication d'une composition de fromage non pasteurisée, le procédé comprenant les étapes consistant à :
(a) préparer un mélange comprenant
(i) 30 à 90 % d'un fromage non vieilli contenant au plus environ 60 % d'humidité en masse du fromage non vieilli et
(ii) une pâte comprenant des particules d'une source de protéine, dans laquelle les proportions entre le fromage non vieilli et la pâte, et la teneur en humidité de la pâte et le fromage non vieillis sont sélectionnés de façon à fournir une teneur en humidité de la composition de fromage au plus environ égale à 60 % en masse de la composition de fromage ; ledit mélange étant exempt de sels de fusion ;
(b) mélanger et chauffer le mélange pour obtenir la composition de fromage présentant un goût, une texture et une consistance similaires à celles d'un fromage vieilli naturellement, dans lequel la température de chauffage, comprise dans une gamme allant d'environ 35° C à environ 65° C, est suffisante pour conférer au mélange une texture élastique, mais est inférieure à des températures de pasteurisation, et le mélange est effectué dans des conditions de faible cisaillement pour empêcher la destruction de la texture du fromage naturel ; et
(c) emballer ladite composition de fromage.

2. Le procédé selon la Revendication 1, dans lequel la source de protéine est sélectionnée parmi le groupe composé d'un fromage vieilli, de fromage blanc, de fromage blanc à faible teneur en matière grasse, de fromage blanc de caillé sec, de fromage de Baker, de fromage de Baker de caillé sec, de quark, de ricotta, de ricotta sèche, de ricotone, d'impastata, de protéine de petit-lait microparticulaire, et de mélanges de ceux-ci.

3. Le procédé selon la Revendication 1, dans lequel la quantité de fromage non vieilli est comprise dans une gamme allant d'environ 40 % à environ 85 %, et de préférence de 65 % à 80 %.

4. Le procédé selon la Revendication 2, dans lequel la source de protéine comprend le fromage vieilli dans une quantité efficace pour conférer à la composition qui n'a pas été vieillie la saveur du fromage vieilli jusqu'à environ 15 % du fromage vieilli.

5. Le procédé selon la Revendication 2, dans lequel la source de protéine est un mélange d'environ 7 % à environ 15 % d'un fromage vieilli et environ 7 % à environ 20 % de quark, calculé sur la base de la masse totale de la composition.

6. Le procédé selon la Revendication 1, dans lequel le procédé comprend l'étape consistant à pré-mélanger la protéine de lait avec le fromage non vieilli avant de préparer le mélange.

7. Le procédé selon la Revendication 6, dans lequel la protéine de lait est ajoutée en tant que concentré de protéine de lait (75 % de protéine) dans une quantité comprise entre environ 2 % et environ 8 %.

8. Le procédé selon la Revendication 1, dans lequel le fromage non vieilli est sélectionné parmi le groupe composé d'un fromage frais, d'un fromage italien doux, d'un caillé de fromage frais, d'un caillé de fromage italien doux, et de fromages et caillés qui sont chimiquement équivalents à ceux-ci, et de mélanges de ceux-ci.

9. Le procédé selon la Revendication 8, dans lequel le fromage italien doux est de la mozzarella partiellement écrémée et à faible teneur en humidité.

10. Le procédé selon la Revendication 1, dans lequel le chauffage est effectué à une température comprise dans la gamme allant d'environ 45° C à 65° C.

11. Le procédé selon la Revendication 1, dans lequel la composition de fromage contient moins d'environ 20 % de matière grasse.

12. Le procédé selon l'une quelconque des Revendications 1 à 11, dans lequel on inclut un ingrédient de saveur, ledit ingrédient étant sélectionné parmi le groupe composé d'un fromage modifié par une enzyme, d'une saveur de fromage naturelle, d'une saveur de fromage artificielle et de mélanges de ceux-ci.
